# EUROPEAN PATENT SPECIFICATION

(11) **EP 3 081 123 B1**
(45) Date of publication and mention of the grant of the patent: **27.11.2019**
(21) Application number: 14824563.2
(22) Date of filing: 02.12.2014
(51) Int. Cl.: A47J 31/44

(54) **MACHINE FOR PREPARING BEVERAGES WITH COMPACT COLLECTION CONTAINER AND PROCESS OF OPERATION OF SAID MACHINE**
GETRÄNKEZUBEREITUNGSMASCHINE MIT KOMPAKTEM SAMMELBEHÄLTER UND VERFAHREN ZUM BETREIBEN
MACHINE DE PRÉPARATION DE BOISSONS AVEC CONTENANT DE COLLECTE COMPACT ET PROCÉDÉ DE FONCTIONNEMENT DE CETTE MACHINE

(30) Priority: 02.12.2013 PT 10733313
(43) Date of publication of application: 19.10.2016
(73) Proprietor: Novadelta-Comércio e Industria de Cafés, Lda., 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2014/000071
(87) International publication number: WO 2015/084202

(56) References cited:
- US-A1- 2011 041 698

## Description

### Field of the invention

The present invention refers to the field of machines for preparing beverages, notably based upon the infusion of aromatic substances such as for example espresso type coffee, tea and similar, by means of portion packages, provided as substantially rigid capsules or as substantially flexible pods. In particular, the present invention refers to collection means of liquid and/or solid residual material generated by said beverage preparation machine.

The present invention further refers to a process for operation of this type of machines, in particular for the operation of a respective liquid and/or solid collection recipient.

### Background of the invention

The prior art includes many solutions of machines for the preparation of beverages from aromatic substances provided in portion packages, such as for example rigid capsules or flexible pods. These beverage preparation machines typically present an extraction device adapted for injecting pressurized fluid into said portion package and collect a resulting beverage. Moreover, these beverage preparation machines typically also present a collection container for collection of said portion packages after their processing in said extraction device. This collection container is usually provided directly underneath said extraction device and configured as a box of dimensions allowing the collection of a plurality of said used portion packages.

Document US-A-2011/0041698 discloses a machine for the preparation of beverages according to the preamble of independent claim 1 and a process of preparation of beverages according to the preamble of independent claim 12.

Document EP 2146608 B1 discloses a solution for separating the content and the package of said portion packages, whereby it uses two respective collection containers for such purpose.

Document WO 2011/086087 A1 discloses a solution for automatically recognizing and indicating to a user an insufficient or erroneous placement of the collection container for collecting liquid or solid residual material in a machine according to the aforementioned class.

In particular in the case of beverage preparation machines of compact construction, there is an interest in optimizing the distribution of used portion packages within said collection container, so as to maximize the number that can be collected in a given reduced volume. In fact, in the solutions known in the prior art, after extraction said portion packages fall under the action of the gravity force inside of the collection container, where they accumulate in irregular form, that way occupying a bigger volume than it would be necessary if they were to be arranged in regular form.

Moreover, in some cases it occurs some accumulation of liquid residues resulting from the extraction in said collection container. In such cases, there is an interest in being able to separately shed the liquid residues, for example into a different final waste recipient than that of the used portion packages.

### General description of the invention

The objective of the present invention is to provide a machine for preparing beverages by means of extraction of an aromatic substance, including espresso type coffee, tea and similar, based upon the processing of said individual portion packages, and that presents a collection container part that maximizes the volumetric collection capacity of used portion packages.

This objective is solved according to the present invention by means of a machine according to claim 1.

In particular, a beverage preparation machine according to the present invention presents a collection container part that comprises at least one, preferentially at least two collection zones that present at least one characteristic dimension that corresponds approximately to at least one characteristic dimension of said portion packages, and at least one interaction element provided upstream of said collection zone and adapted so that said portion packages can accumulate in a similar disposition as a result of a respective spatial constrain and of the spatial orientation induced by the interaction with said upstream interaction element.

There are this way provided two elements that condition or influence the movement of said portion packages inside of the collection container: the dimension of the collection zones that constrain the movement so that the successive portion packages keep the same spatial disposition along their path, and the presence of an interaction element arranged in a given fixed position and with a given configuration so that it induces a movement along a given orientation.

It is this way advantageously minimized the occurrence of void spaces between portion packages resulting when said portion packages are collected in random manner, disposed one on top of the other in irregular spatial dispositions.

According to a preferred embodiment, each of said collection zones presents a width, preferentially also a height, that is at most 50% bigger, preferentially at most 25% bigger than a corresponding characteristic dimension of said portion packages, preferentially as resulting from their spatial orientation at the exit from said extraction device, including the diameter or the height, whereby said width is preferentially substantially constant along each collection zone.

According to another preferred embodiment, said collection container comprises an upstream container part developing substantially vertically in at least part of its extension, and a downstream container part developing substantially horizontally or in a tilted manner in at least part of its extension, whereby said container parts jointly form an elbow-like configuration, whereby the inferior surface of said elbow region is preferentially configured in a straight or curved tilted surface.

According to a preferred embodiment, each of said collection zones develops along at least part of said downstream container part.

According to another preferred embodiment, said collection container (43) is provided with an upstream distribution element (4, preferentially arranged on said upstream container part, and with at least two collection zones on said downstream collection part. In particular, said upstream distribution element is configured in planar form and preferentially with an upwards oriented side configured in an angled vertex form. According to another preferred embodiment, said upstream distribution element is arranged in part of the passage cross section of said upstream container part and preferentially centered relative to the latter.

It thus advantageously results that, as a result of the interaction with said distribution element, the successive portion packages are distributed by one of the downstream collection zones and are arranged in the latter in a substantially line-like ordered manner.

According to another preferred embodiment, said collection container is provided with an upstream deflection element preferentially arranged on said downstream container part, disposed at a height above the base of said collection container that at least corresponds, is preferentially bigger, than a corresponding characteristic dimension of said portion package, such as for example the package height.

According to another preferred embodiment, said upstream deflection element is configured as a sort of oblique ramp, of curved or straight surface, preferentially developing in at least most part of the width of said collection container. This distribution element provides a distribution of successive portion packages in two lines, one on top of the other.

According to another preferred embodiment, said collection container is provided as a downstream distribution element, arranged in the symmetry axis of a collection zone, preferentially configured in a straight manner and with one side oriented upstream and configured as a sort of angled vertex.

According to another preferred embodiment, said collection container is provided with a retention element, configured so as to prevent the exit of said portion packages except through a previously defined zone of said collection container.

According to another preferred embodiment, each collection zone of said collection container presents a depth that is adapted so that it can collect a plurality, preferentially at least two of said portion packages arranged in a line along at least part of the extension at least of the downstream container part.

According to another preferred embodiment, said collection container presents a depth (d) of at most 20 cm, preferentially at most 15 cm.

Another objective of the present invention is to provide a more effective process of preparation of a beverage in terms of temporary collection and separation of respective residues.

This objective is solved according to the present invention by means of a process according to claim 12.

In the scope of the present invention, under "machine structural parts" it should be understood those construction elements that support the functional operation components (that is, those components that directly or indirectly participate in the process of preparation of a beverage), notably by means of fixed assembly connections, thereby ensuring a given spatial relation between them.

### Description of the figures

The present invention shall now be explained in greater detail based upon preferred embodiments and in the figures that are attached. The Figures show, in simplified schematic representations:
- Figure 1:: side, top and front views of an embodiment of a beverage preparation machine (1), based upon portion packages (2) and including a collection container (43) for collection thereof;
- Figure 2:: top and front views, as well as side and front cuts of the embodiment of the collection container (43) in the beverage preparation machine (1) according to Figure 1;
- Figure 3:: perspective views from above and from underneath of the collection container (43) represented in Figure 2;
- Figure 4:: top and front views, as well as side-cut view of a first embodiment of the collection container (43) in a beverage preparation machine (1) according to the invention;
- Figure 5:: top and front views, as well as side-cut view of a second embodiment of collection container (43) in a beverage preparation machine (1) according to the invention;
- Figure 6:: top and partial side-cut views of a third embodiment of a collection container (43) on a beverage preparation machine (1) according to the invention.

### Detailed description of preferred embodiments of the invention

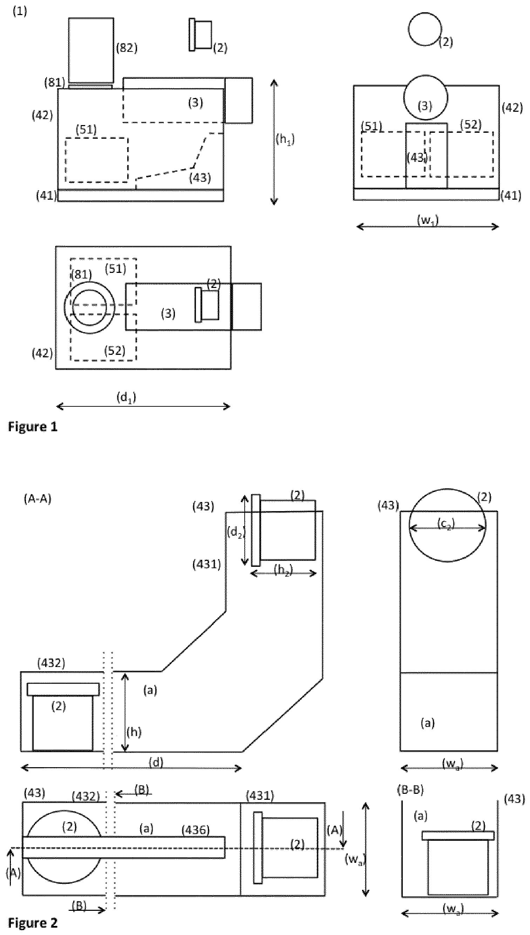

**Figure 1** represents side view (on the top left), front view (on the top right) and top view (on the bottom) of a beverage preparation machine (1) adapted for processing portion packages (2) in an extraction device (3) provided accordingly, supported by machine structural parts (4), besides of several functional operation components. In particular, these functional operation components comprise fluid processing means, including fluid heating means (51) and fluid compression means (52), energy supply means, including energy connection means and, eventually, energy storage means - not represented because known in the prior art -, actuation interface means of the machine - not represented because known in the prior art - and fluid supply means, including connection means (81) to an external supply and fluid supply means (82), such as for example a water supply reservoir. As it can be observed from the drawings, the machine (1) presents a compact and simple construction form, whereby the functional operation components are directly or indirectly supported by a machine base part (41) and by a machine envelope part (42) that jointly define the exterior dimensions, notably a maximum height (h₁), a maximum width (w₁) and a maximum depth (d₁).

The beverage preparation machine (1) presents a collection container (43), preferentially arranged in the front zone of the machine envelope part (42), adapted for collecting solid and/or liquid residues resulting from each beverage preparation cycle. In particular, said collection container (43) is provided so as to collect a plurality of portion packages (2) in a spatially organized manner and therefore, after a respective ejection out of said extraction device (3).

In the case of the represented embodiment, the portion package (2) is inserted into the extraction device (3), processed inside thereof and always ejected in the position represented in Figure 1, that is, along the horizontal relative to respective fluid entry and exit side. The following description shall take as reference this relative orientation of the portion package (2), without constraining the scope of the present invention that is applicable to cases where the orientation is different.

As one can observe from the drawings, it is further preferred when said collection container (43) is configured so as to engage at least with one machine envelope part (42), preferentially also with a machine base part (41). Moreover, it is preferred when said machine envelope part (42) occupies at least 70% of the exposed surface of the machine (1), whereby the exterior face of the collection container (43) occupies at least most part of the remanding exposed surface.

**Figure 2** represents top views (bottom left) and respective side cut AA (top left) and front cut BB (bottom right), as well as front view (top right), of a first embodiment of a collection container (43) in the beverage preparation machine (1) according to Figure 1.

According to a first aspect, said collection container (43) is configured so that it presents at least one collection zone, in this case only one collection zone (a), with a cross-section that corresponds at least approximately to the cross-section and/or front-section of said portion packages (2), so that said portion packages (2) are arranged in a substantially regular manner in said collection container (43).

According to a second aspect, and as one can observe in particular from the cross-section cut BB, said collection container (43) presents at least one collection zone (a) with a width (w) that is at most 50% bigger, preferentially at most 25 % bigger, than a corresponding characteristic dimensions (c) of the portion packages (2). This characteristic dimension can be the maximum diameter (d) or the maximum height (h) of said portion packages (2). In general, said collection container (43) is configured so that it constrains the movement of the portion packages (2), after being successively ejected out of said extraction device (3), in such a way that these are successively arranged along at least one row along the extension of said collection zone (a).

As one can further observe, said collection container (43) is provided with an upstream container part (431) developing substantially vertically along at least part of its extension, and a downstream container part (432) developing substantially horizontally in inclined manner along at least part of its extension, whereby said two container parts (431, 432) jointly form an elbow-like configuration, whereby the inferior surface of the elbow zone is preferentially configured inclined, in a straight or curved surface.

According to a preferred embodiment, the collection container (43) is provided with a retention element (436), configured so as to stop the exit of said portion packages (2) except through a previously defined zone of said collection container (43). It is herewith enabled that, by means of inclination of the collection container (43) in a given direction, there can be provided a selective discharge of liquids without also said portion packages (2) exiting from said collection container (43).

Moreover, it is preferred when each collection zone (a, b) of said collection container (43) is configured with a depth (d) such that it collects a plurality of portion packages (2) arranged in row along at least said downstream container part (432).

Moreover, it is preferred when said collection container (43) is configured so as to collect as least 3, preferentially at least 6 of said portion packages (2), and presents a depth (d) of at most 20 cm, preferentially at most 15 cm.

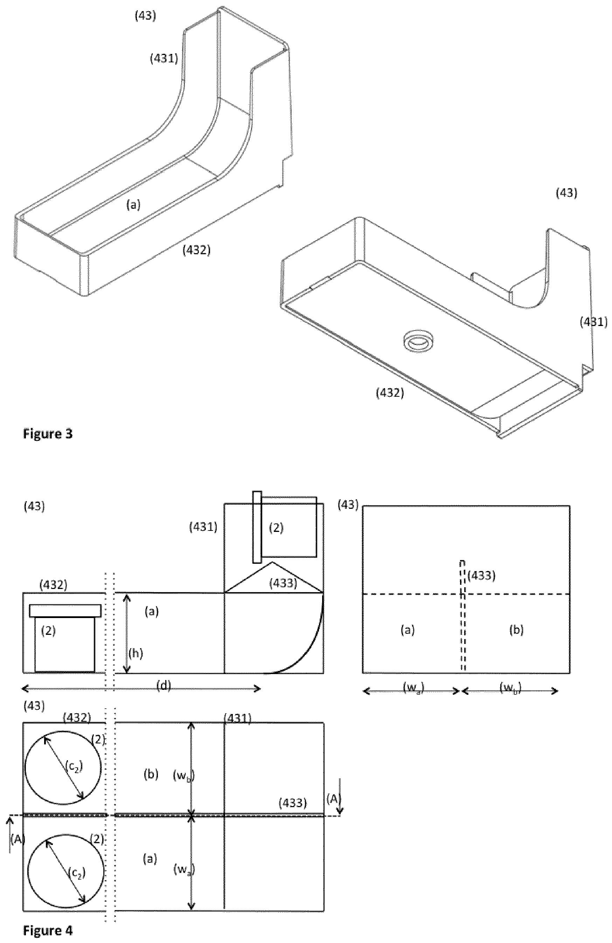

**Figure 3** represents top perspective views (top) and bottom perspective views (bottom) of the embodiment represented in Figure 2.

As one can observe from the drawings, the bottom surface of the elbow zone between the two container parts (431, 432) is in this case configured with a curved shape, so as to better support a deflection of the movement orientation of said portion packages.

**Figure 4** represents a top view (bottom left), and respective side cut (top left), as well as front view (top right) of a first embodiment of a collection container (43) according to the present invention whereby the latter presents two collection zones (a, b), arranged in parallel along the depth (d) of said collection container (43). It is thus maintained a substantially regular arrangement of the successive portion packages (2) as these exit from said extraction device (3) and enter in said collection (43) container. In particular, in the case of this embodiment, it is increase the capacity of collection of portion packages (2), maintaining the dimensional proportion of each collection zone (a, b) relative to the characteristic dimension (c) of said portion packages (2).

The upstream container part (431) of the collection container (43) develops in this case along the width of the two collection zones (a, b), that is, with a dimension that corresponds approximately to twice the width (w) of each thereof. Moreover, the upstream container part (431) is provided with an upstream distribution element (433), preferentially arranged on the upstream container part (431). According to a preferred embodiment, said upstream distribution container (433) is configured with a planar form and preferentially with a side oriented upwards configured in form of angled vertex. Moreover, according to another preferred embodiment, said upstream distribution element (433) is arranged in part of the cross-section passageway of the upstream container part (431) and preferentially in a centered manner relative to the latter. This configuration has proven itself as more effective for distributing portion packages (2) that fall along the upstream container part (431) by the two collection zones (a, b) provided downstream.

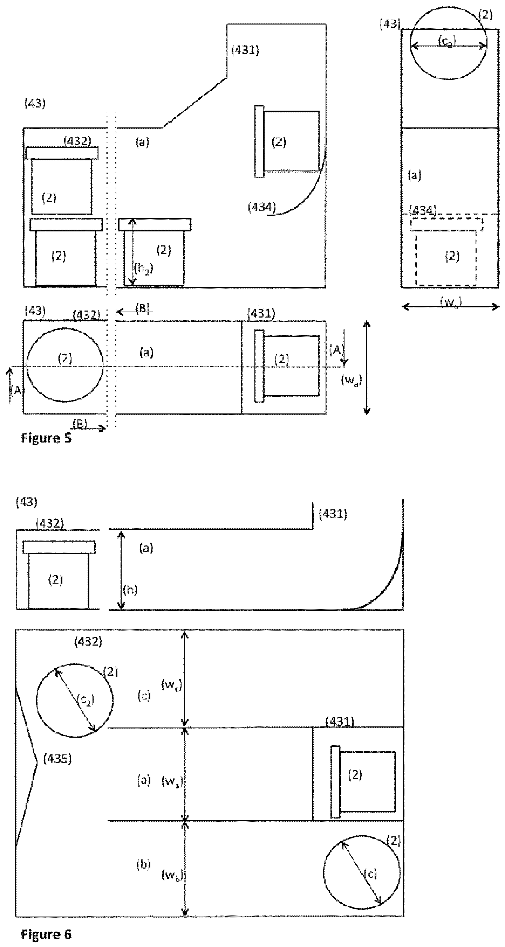

**Figure 5** represents top views (bottom left) and side-cut (top left), as well as front view (top right), of a second embodiment of collection container (43) according to the present invention, whereby this presents only one collection zone (a) presenting a width (w) in its horizontal part (432), but is configured so as to enable the collection of two rows of collection packages (2) arranged one on top of the other along a collection zone (a).

In this sense, according to a preferred embodiment and as one can observe in the side cut view (top left), said collection container (43) is provided with an upstream deflection element (434), preferentially arranged in the upstream container part (431). In particular, said upstream deflection element (434) is arranged at a height above of the base of the collection container (43) that corresponds, preferentially is bigger, than a corresponding characteristic dimension (c₂) of said portion package (2), notably the height (h₂) of package. Moreover, said upstream deflection element (434) is configured as a sort of oblique ramp, of curved surface (as in the represented embodiment) or plane, preferentially developing along at least most part of the width (w) of the collection container (43).

**Figure 6** represents top views (bottom) and partial side-cut (top) of a third embodiment of collection container (43) according to the present invention, whereby the latter presents three collection zones (a, b, c), arranged in parallel along the depth (d) of said downstream container part (432) of said collection container (43). As one can observe from the drawing, the upstream container part (431) only occupies the vertical pat of the upstream zone or a collection zone (a) arranged between the other (b, c). a portion package (2) thus first fall along this upstream container part (431) and moves along the central collection zone (a) until it bumps into a downstream distribution element (435) provided downstream thereof and that deflects said portion package (2) into one of the collection zones (b, c) provided on each side.

According to a preferred embodiment, said downstream distribution element (435) is arranged in alignment with the symmetry axis of said collection zone (a), and preferentially configured in planar form and with a side oriented upstream and configured in form of angled vertex. The portion packages (2) thus should, moved by the kinetic energy generated when falling upstream, successively occupy the space available in the side collection zones (b, c), and then the space available in the central collection zone (a). As it results obvious, it is thus possible to substantially increase the capacity of collection of portion packages (2) in a comparatively reduced volume.

## Claims

1. Machine (1) for the preparation of beverages from at least one edible substance provided inside of a portion package (2), and presenting at least one extraction device (3) adapted for processing of said portion package (2) and at least one collection container (43) adapted for collection of said portion packages (2) downstream from said extraction device (3),
**characterized**
**in that** said collection container (43) comprises at least one collection zone (a, b) presenting a characteristic dimension that corresponds approximately to at least one characteristic dimension of said portion packages (2), and at least one interaction element (433, 434, 435) provided upstream of said collection zone (a, b) and adapted so that said portion packages (2) can accumulate themselves in a similar disposition as a result of a spatial constrain and of the spatial orientation induced by the interaction with said upstream interaction element (433, 434, 435).

2. Machine (1) according to claim 1, **characterized in that** each of said collection zones (a, b) presents a width (wₐ, w_{b}), preferentially also a height (h), that is at most 50% bigger, preferentially at most 25% bigger than a corresponding characteristic dimension (c₂) of said portion packages (2), preferentially as resulting from their spatial orientation at the exit from said extraction device (3), including the diameter (d₂) or the height (h₂), whereby said width (wₐ, w_{b}) is preferentially substantially constant along each collection zone (a, b).

3. Machine (1) according to claim 1 or 2, **characterized in that** said collection container (43) comprises an upstream container part (431) developing substantially vertically in at least part of its extension, and a downstream container part (432) developing substantially horizontally or in a tilted manner in at least part of its extension, whereby said container parts (431, 432) jointly form an elbow-like configuration, whereby the inferior surface of said elbow region is preferentially configured in a straight or curved tilted surface.

4. Machine (1) according to claims 1 or 3, **characterized in that** each of said collection zones (a, b) develops at least on said downstream container part (432).

5. Machine (1) according to claim 3 or 4, **characterized in that** said collection container (43) is provided with an upstream distribution element (433), preferentially arranged on said upstream container part (431), and with at least two collection zones (a, b) on said downstream collection part (432).

6. Machine (1) according to previous claim 5, **characterized in that** said upstream distribution element (433) is configured in planar form and preferentially with an upwards oriented side configured in an angled vertex form.

7. Machine (1) according to previous claims 5 to 6, **characterized in that** said upstream distribution element (433) is arranged in part of the passage cross section of said upstream container part (431) and preferentially centered relative to the latter.

8. Machine (1) according to any one of previous claims 3 to 7, **characterized in that** said collection container (43) is provided with an upstream deflection element (434) preferentially arranged on said downstream container part (432), disposed at a height above the base of said collection container (43) that at least corresponds, is preferentially bigger, than a corresponding characteristic dimension (c₂) of said portion package (2), such as for example the package height (h₂).

9. Machine (1) according to previous claim 8, **characterized in that** said upstream deflection element (434) is configured as a sort of oblique ramp, of curved or straight surface, preferentially developing in at least most part of the width (w) of said collection container (43).

10. Machine (1) according to any one of previous claims 1 to 9, **characterized in that** said collection container (43) is provided as a downstream distribution element (435), arranged in the symmetry axis of a collection zone (a), preferentially configured in a straight manner and with one side oriented upstream and configured as a sort of angled vertex.

11. Machine (1) according to any one of previous claims 1 to 10, **characterized in that** said collection container (43) is provided with a retention element (436), configured so as to prevent the exit of said portion packages (2) except through a previously defined zone of said collection container (43).

12. Process of preparation of beverages in a machine (1) for preparing beverages based upon portion packages (2), including the following steps:
- providing a beverage preparation machine (1) comprising at least one extraction device (3) and a collection container (43) adapted for collection of said portion packages (2),
- ejection of said portion package (2) outwards from said extraction device (3),
- collection of said portion package (2) in at least one collection zone (a, b) in said collection container (43),
- interaction of said portion package (2) with at least one interaction element (433, 434, 435) provided in said collection container (43),
whereby said portion package (2) moves inside of said collection container (43) with a substantially constant spatial orientation relative to the movement direction **characterized in that** said portion packages (2) are successively moved with a given spatial orientation inside of each collection zone (a, b) of said collection container (43) as a function of a previous interaction with said interaction element (433, 434, 435), thereby assuming in each case a regular disposition, with a substantially common spatial orientation, including along a row and/or along two rows arranged one on top of the other.

13. Process according to claim 12, **characterized in that** it further includes the following steps:
- removing said collection container (43) from a respective engagement in said beverage preparation machine (1), in particular after having collected at least one portion package (2);
- turning said collection container (43) along a first set of inclinations and/or of spatial orientations, preferentially previously defined, so that said portion packages (2) can exit, preferentially successively, through a previously defined zone of said collection container (43).

14. Process according to claims 12 or 13, **characterized in that** it further includes the step of turning said collection container (43) along a second interval of inclinations and/or of spatial orientations, so as to shed liquid eventually accumulated on said collection container (43), without thereby also causing said portion packages (2) to exit.

## Patentansprüche

1. Maschine (1) zu Getränkezubereitung von mindestens einer essbaren Substanz vorhanden innerhalb einer Portionspackung (2) und darstellend mindestens ein Absauggerät (3) angepasst zur Sachbearbeitung von genannter Portionspackung (2) und mindestens einem Sammelbehälter (43) angepasst zur Sammlung von genannten Portionspackungen (2), stromabwärts von genanntem Absauggerät (3),
**dadurch gekennzeichnet, dass** genannter Sammelbehälter (43) mindestens ein Sammelbereich (a, b) umfasst, darstellend eine charakteristische Dimension von genannten Portionspackungen (2), und mindestens ein Wechselwirkungselement (433, 434, 435) vorhanden stromaufwärts von genanntem Sammelbereich (a, b) und so angepasst, dass genannte Portionspackungen (2) sich selbst in einer ähnlichen Anordnung ansammeln können, als Ergebnis einer Raumbegrenzung und der Raumausrichtung eingeleitet mittels der Wechselwirkung mit genanntem Wechselwirkungselement (433, 434, 435) stromaufwärts.

2. Maschine (1) gemäß Anspruch 1 **dadurch gekennzeichnet, dass** genannte Sammelbereiche (a, b) eine Breite (wₐ, w_{b}), vorzugsweise eine Höhe (h), darstellt, die mindestens 50% größer, vorzugsweise meistens 25% größer als eine entsprechende charakteristische Dimension (c₂) von genannten Portionspackungen (2) ist, vorzugsweise als Ergebnis aus ihrer Raumausrichtung an der Ausfuhr von genanntem Absauggerät (3), einschließlich den Durchmesser (d₂) oder die Höhe (h₂), wobei genannte Breite (wₐ, w_{b}) entlang jeder Sammelzone (a, b) vorzugsweise wesentlich gleichbleibend ist.

3. Maschine (1) gemäß Anspruch 1 oder 2 **dadurch gekennzeichnet, dass** genannter Sammelbehälter (43) ein Behälterteil (431) stromaufwärts umfasst, das sich wesentlich senkrecht in mindestens teils seiner Ausdehnung entwickelt, und ein Behälterteil (432) stromabwärts, das sich wesentlich waagerecht oder in einer geneigten Art in mindestens teils seiner Ausdehnung entwickelt, wobei genannte Behälterteile (431, 432) zusammen eine ellbogenartige Gestaltung formen, wobei die untere Oberfläche von genanntem Ellbogengebiet vorzugsweise in einer geraden oder kurvigen geneigten Oberfläche gestaltet ist.

4. Maschine (1) gemäß Ansprüche 1 oder 3 **dadurch gekennzeichnet, dass** sich jede genannte Sammelzone (a, b) mindestens am genannten Behälterteil (432) stromabwärts entwickelt.

5. Maschine (1) gemäß Anspruch 3 oder 4 **dadurch gekennzeichnet, dass** genannter Sammelbehälter (43) mit einem Verteilerelement (433) stromaufwärts versorgt ist, vorzugsweise an genanntem Behälterteil (431) angeordnet, und mit mindestens zwei Sammelzonen (a, b) an genanntem Sammelteil (432) stromabwärts.

6. Maschine (1) gemäß vorigem Anspruch 5 **dadurch gekennzeichnet, dass** genanntes Verteilerelement (433) stromaufwärts in ebener Form und vorzugsweise mit einer stromaufwärts gerichteten Seite gestaltet in einer eckig winkeligen Form gestaltet ist.

7. Maschine (1) gemäß voriger Ansprüche 5 bis 6 **dadurch gekennzeichnet, dass** genanntes Verteilerelement (433) stromaufwärts teils vom Durchflussquerschnitt von genanntem Behälterteil (431) stromaufwärts und vorzugsweise mittig bzgl. desletzteren angeordnet ist.

8. Maschine (1) gemäß einer der vorigen Ansprüche 3 bis 7 **dadurch gekennzeichnet, dass** genannter Sammelbehälter (43) mit einem Ablenkelement (434) stromaufwärts vorhanden ist, angeordnet vorzugsweise an genanntem Behälterteil (432) stromabwärts, angeordnet in einer Höhe oberhalb der Grundlage von genanntem Sammelbehälter (43), der mindestens entspricht, vorzugsweise größer ist, als eine entsprechende charakteristische Dimension (C₂) von genannter Portionspackung (2), wie z. Bsp. die Packungshöhe (h₂).

9. Maschine (1) gemäß vorigem Anspruch 8 **dadurch gekennzeichnet, dass** genanntes Ablenkelement (434) stromaufwärts als eine schräge Rampe gestaltet, von kurviger oder geraden Oberfläche, vorzugsweise sich entwickelnd in mindestens meistenteils der Breite (w) von genanntem Sammelbehälter (43) .

10. Maschine (1) gemäß einer der vorigen Ansprüche 1 bis 9 **dadurch gekennzeichnet, dass** genannter Sammelbehälter (43) als ein Verteilerelement (435) stromabwärts versorgt ist, angeordnet in der Symmetrieachse einer Sammelzone (a), vorzugsweise gestaltet in einer geraden Art und mit einer stromaufwärts gerichteten Seite und gestaltet als eine Art winkelige Ecke.

11. Maschine (1) gemäß einer der vorigen Ansprüche 1 bis 10 **dadurch gekennzeichnet, dass** genannter Sammelbehälter (43) mit einem Halteelement (436) versorgt ist, so gestaltet, um die Ausfuhr von genannten Portionspackungen (2) zu verhindern, außer durch eine vorherig definierten Zone von genanntem Sammelbehälter (43).

12. Verfahren zur Getränkezubereitung in einer Maschine (1) zur Getränkezubereitung basierend auf Portionspackungen (2), einschließend die folgenden Schritte:
- Versorgung einer Getränkezubereitungsmaschine (1) umfassend mindestens ein Absauggerät (3) und ein Sammelbehälter (43) angepasst zur Sammlung von genannten Portionspackungen (2),
- Ausstoß der genannten Portionspackung (2) außerhalb des genannten Absauggerätes (3),
- Sammlung von genannter Portionspackung (2) in mindestens einer Sammelzone (a, b) in genanntem Sammelbehälter (43),
- Wechselwirkung von genannter Portionspackung (2) mit mindestens einem Wechselwirkungselement (433, 434, 435) vorhanden in genanntem Sammelbehälter (43),
wobei sich genannte Portionspackung (2) innerhalb des genannten Sammelbehälters (43) mit einer wesentlich gleichbleibenden Raumrichtung bewegt bzgl. der Bewegungsrichtung **dadurch gekennzeichnet, dass** genannte Portionspackungen (2) mit einer gegebenen Raumrichtung innerhalb jeder Sammelzone (a, b) von genanntem Sammelbehälter (43) aufeinanderfolgend bewegt werden, als Funktion einer vorigen Wechselwirkung mit genanntem Wechselwirkungselement (433, 434, 435), dadurch übernehmend in jedem Fall eine regelmäßige Anordnung, mit einer wesentlich gemeinsamen Raumrichtung, einschließlich entlang einer Reihe und/ oder entlang zwei Reihen angeordnet eine auf der anderen.

13. Verfahren gemäß Anspruch 12 **dadurch gekennzeichnet, dass** es weiterhin die folgenden Schritte einschließt:
- Entnahme von genanntem Sammelbehälter (43) von einer entsprechenden Kupplung in genannter Getränkezubereitungsmaschine (1), insbesondere nachdem mindestens eine Portionspackung (2) gesammelt wurde;
- Drehen von genanntem Sammelbehälter (43) entlang ersten Neigungen und/ oder Raumrichtungen, vorzugsweise vorher bestimmt, so dass genannte Portionspackungen (2) können ausführt werden, vorzugsweise aufeinanderfolgend, mittels einer vorher bestimmten Zone von genanntem Sammelbehälter (43) .

14. Verfahren gemäß Ansprüche 12 oder 13 **dadurch gekennzeichnet, dass** es weiterhin den Drehschritt von genanntem Sammelbehälter (43) entlang einem zweiten Abstand von Neigungen und/oder Raumrichtungen einschließt, so um Flüssigkeit zu vergießen, die sich schließlich an genanntem Sammelbehälter (43) angehäuft hat, ohne dadurch auch genannte Portionspackungen (2) auszuführen.

## Revendications

1. Machine (1) pour la préparation de breuvages à partir d'au moins une substance comestible fournie à l'intérieure d'un emballage portion (2) et présentant au moins un dispositif d'extraction (3) adapté au traitement dudit emballage portion (2) et au moins un récipient collecteur (43) adapté à la collecte desdits emballages portion (2) en aval dudit dispositif d'extraction (3),
**caractérisé par le fait**
**que** ledit récipient collecteur (43) comprend au moins une zone de collecte (a, b) présentant une dimension caractéristique qui correspond approximativement au moins à une dimension caractéristique desdits emballages portion (2) et au moins à un élément d'interaction (433, 434, 435) fourni en amont de ladite zone de collecte (a, b) et adapté afin que lesdits emballages portion (2) puissent s'accumuler eux-mêmes dans une disposition similaire du fait d'une contrainte spatiale et de l'orientation spatiale induite par l'interaction avec ledit élément d'interaction en amont (433, 434, 435).

2. Machine (1) selon la revendication 1, **caractérisée par le fait que** chacune des zones de collecte (a, b) présente une largeur (wₐ, w_{b}), et de préférence également une hauteur (h), qui est de 50 % maximum plus grande, de préférence de 25 % maximum plus grande que la dimension caractéristique correspondante (C₂) desdits emballages portion (2), de préférence résultant de leur orientation spatiale à la sortie dudit dispositif d'extraction (3), comprenant le diamètre (d₂) ou la hauteur (h₂), où ladite largeur (wₐ, w_{b}) est de préférence substantiellement constante le long de chaque zone de collecte (a, b).

3. Machine (1) selon la revendication 1 ou 2, **caractérisée par le fait que** le récipient collecteur (43) comprend une partie récipient en amont (431) se développant substantiellement à la verticale dans au moins une partie de son extension et dans une partie récipient en aval (432) se développant substantiellement à l'horizontal ou de manière inclinée dans au moins une partie de son extension, où lesdites parties de récipient (431, 432) forment conjointement une configuration de type coude, où la surface inférieure de ladite région en coude est de préférence configurée en une surface inclinée droite ou courbée.

4. Machine (1) selon la revendication 1 ou 3, **caractérisée par le fait que** chacune des dites zones de collecte (a, b) se développe au moins sur ladite partie du récipient en aval (432).

5. Machine (1) selon la revendication 3 ou 4, **caractérisée par le fait que** le récipient collecteur (43) est fourni avec un élément de distribution en amont (433), de préférence arrangé sur ladite partie du récipient en amont (431) et avec au moins deux zones de collecte (a, b) sur ladite partie de collecte en aval (432).

6. Machine (1) selon la revendication précédente 5, **caractérisée par le fait que** ledit élément de distribution en amont (433) est configuré de forme plane et de préférence avec un côté orienté vers le haut, configuré sous une forme de sommet angulaire.

7. Machine (1) selon les revendications précédentes entre 5 et 6, **caractérisée par le fait que** ledit élément de distribution en amont (433) est arrangé dans la partie de la section de passage en croix de ladite partie du récipient en amont (431) et de préférence centré par rapport à cette dernière.

8. Machine (1) selon une quelconque revendication précédente entre 3 et 7, **caractérisée par le fait que** ledit récipient collecteur (43) est fourni avec un élément de déviation en amont (434) de préférence arrangé de préférence sur ladite partie du récipient en aval (432), disposée à la hauteur de la base dudit récipient collecteur (43) qui correspond au moins, mais est de préférence plus grande qu'une dimension caractéristique correspondante (C₂) dudit emballage portion (2), telle que la hauteur de l'emballage (h₂), par exemple.

9. Machine (1) selon la revendication précédente 8, **caractérisée par le fait que** ledit élément de déviation en amont (434) est configuré comme une sorte de rampe oblique d'une surface droite ou courbée, de préférence se développant au moins sur la plupart de la largeur (w) dudit récipient collecteur (43).

10. Machine (1) selon une quelconque revendication précédente entre 1 et 9, **caractérisée par le fait que** ledit récipient collecteur (43) est fourni comme élément de distribution en aval (435), arrangé sur un axe symétrique de la zone de collecte (a), de préférence configurée d'une manière droite et avec un côté orienté en amont et configuré comme une sorte de sommet angulaire.

11. Machine (1) selon une quelconque revendication précédente entre 1 et 10, **caractérisée par le fait que** ledit récipient collecteur (43) est fourni avec un élément de rétention (436), configuré afin d'éviter la sortie desdits emballages portion (2) sauf à travers une zone préalablement définie dudit récipient collecteur (43).

12. Processus de préparation de breuvages dans une machine (1) de préparation de breuvages sur la base d'emballages portion (2), comprenant les étapes suivantes :
- Fournir une machine de préparation de breuvage (1) comprenant au moins un dispositif d'extraction (3) et un récipient collecteur (43) adapté à la collecte desdits emballages portion (2),
- Éjection de l'emballage portion (2) vers l'extérieur dudit dispositif d'extraction (3),
- Collecte dudit emballage portion (2) dans au moins une zone de collecte (a, b) dans ledit récipient collecteur (43),
- Interaction dudit emballage portion (2) avec au moins un élément d'interaction (433, 434, 435) fourni dans ledit récipient collecteur (43),
où ledit emballage portion (2) se déplace à l'intérieur dudit récipient collecteur (43) avec une orientation spatiale substantiellement constante par rapport à la direction du mouvement **caractérisé par le fait que** les emballages portion (2) sont successivement déplacés dans une orientation spatiale donnée à l'intérieur de chaque zone de collecte (a, b) dudit récipient collecteur (43) en tant que fonction de l'interaction précédente avec ledit élément d'interaction (433, 434, 435), assumant ainsi dans chaque cas, une disposition régulière avec une orientation spatiale substantiellement commune, y compris le long d'une ligne et/ou le long de deux lignes arrangées l'une sur l'autre.

13. Processus selon la revendication 12, **caractérisée par le fait qu'**il inclut en outre les étapes suivantes :
- Retrait dudit récipient collecteur (43) de son engagement dans ladite machine de préparation de breuvage (1), en particulier après avoir collecté au moins un emballage portion (2) ;
- Tourner ledit récipient collecteur (43) le long d'un premier ensemble d'inclinaisons et/ou d'orientations spatiales, de préférence définies préalablement, afin que lesdits emballages portion (2) puissent sortir, de préférence successivement, à travers une zone préalablement définie dudit récipient collecteur (43) .

14. Processus selon les revendications 12 ou 13, **caractérisé par le fait qu'**il inclut en outre l'étape de virage dudit récipient collecteur (43) le long d'un second intervalle d'inclinaisons et /ou d'orientations spatiales, afin de verser du liquide éventuellement accumulé dans ledit récipient collecteur (43), sans que cela cause également et par conséquent la sortie desdits emballages portion (2).
